# EUROPEAN PATENT SPECIFICATION

(11) **EP 2 537 964 B1**
(45) Date of publication and mention of the grant of the patent: **24.12.2014**
(21) Application number: 11744669.0
(22) Date of filing: 16.02.2011
(51) Int. Cl.: D01F 1/10, C08F 220/22, D01D 5/04, D01F 6/36, D01F 6/52, D01F 6/92, D04H 1/42, D04H 1/728, D01D 5/00, C08F 222/10, D01F 6/94

(54) **FINE FIBERS WITH MODIFIED SURFACE**
FEINE FASERN MIT MODIFIZIERTER OBERFLÄCHE
FIBRES FINES À SURFACE MODIFIÉE

(30) Priority: 16.02.2010 JP 2010031878
(43) Date of publication of application: 26.12.2012
(73) Proprietor: University of Fukui, Fukui 9108507 (JP); Nissan Chemical Industries, Ltd., Chiyoda-ku Tokyo 1010054 (JP)
(72) Inventor: OGATA, Nobuo, Fukui-shi Fukui 910-8507 (JP); SHIMADA, Naoki, Fukui-shi Fukui 910-8507 (JP); HARAGUCHI, Masayuki, Funabashi-shi Chiba 274-8507 (JP); ODOI, Keisuke, Tokyo 101-0054 (JP)
(74) Representative: Hoffmann Eitle
(86) International application number: PCT/JP2011/053279
(87) International publication number: WO 2011/102383

(56) References cited:
- EP-A1- 1 767 583
- WO-A1-2007/049608
- JP-A- 2003 529 658
- JP-A- 2009 256 864
- US-A- 5 560 992
- US-A1- 2006 292 369
- US-A1- 2007 166 464
- DEITZEL J M ET AL: "Electrospinning of polymer nanofibers with specific surface chemistry", POLYMER, ELSEVIER SCIENCE PUBLISHERS B.V, GB, vol. 43, no. 3, 28 February 2002 (2002-02-28), pages 1025-1029, XP004323626, ISSN: 0032-3861, DOI: 10.1016/S0032-3861(01)00594-8

## Description

### TECHNICAL FIELD

The present invention relates to surface-modified fine fibers obtained by electrostatic spinning of a resin composition to which a fluoroalkyl group-containing highly branched polymer is added.

### BACKGROUND ART

Polymer (macromolecular) materials are increasingly utilized in many fields in recent years. Along with this, the properties of the surface and the interface thereof as well as the features of the polymer as a matrix become important in each field. For example, properties related to surface and interface control, such as water repellency, oil repellency, antifouling property, non-stickiness, separation properties, mold release properties, smoothness, wear resistance, anti-reflective properties, and chemical resistance, are expected to be improved by using a fluorine compound with low surface energy as a surface modifier, which therefore has been proposed in various kinds.

For example, a method of polymer surface modification by adding a highly branched polymer to a matrix polymer composed of a linear polymer and then segregating the highly branched polymer at the surface of the matrix polymer is known (Patent Document 1).

An electrostatic spinning method, which is also called an electrospinning method, employing solution spinning is a technique of applying a high positive voltage to a polymer solution and then spraying the resultant onto a target surface that is grounded or negatively charged so as to form fibers. By this technique, nanosized fine fibers can be relatively easily prepared. Fine fibers have a significantly large surface area, and therefore are expected to find applications in nonwoven fabrics, filters, separators, and cell cultures.

As a related art for modifying the surface, such as achieving water repellency, of fine fibers by electrostatic spinning, a method of dissolving a hydrophilic polyamide elastomer and a water-repellent polyurethane elastomer in a solvent and then performing electrostatic spinning is disclosed (Patent Document 2).

A technique of coating polyamide fine fibers prepared by electrostatic spinning with a water-repellent fluoro-monomer and -oligomer and then performing curing with an electron beam is also disclosed (Patent Document 3).

### Related Art Documents

### Patent Documents

Patent Document 1: International Publication No. WO 2007/049608 pamphlet
Patent Document 2: Japanese Patent Application Publication No. 2009-256864 (JP 2009-256864 A)
Patent Document 3: Japanese Patent Application Publication No. 2009-534543 (JP 2009-534543 A)

### SUMMARY OF THE INVENTION

### Problem to be Solved by the Invention

As described above, various methods of surface modification of fine fibers by electrostatic spinning have been suggested. The method of surface modification by adding a water-repellent polyurethane elastomer disclosed in Patent Document 2 requires a large amount of water-repellent elastomers to be added, namely as much as 60% by mass or more of polyurethane elastomers to be added to a polyamide elastomer, in order to achieve a certain level of water repellency of fine fibers, and therefore the inherent physical properties of a matrix polymer might be impaired.

The technique disclosed in Patent Document 3 is complicated in the steps, namely requires preparation of polyamide fine fibers, coating of the resultant with a water-repellent fluoro-monomer and -oligomer, and then curing of the resultant by an electron beam, and therefore is industrially disadvantageous.

Therefore, surface-modified fines fiber that preserves the inherent physical properties of a matrix polymer, the surface of which is efficiently modified, and that can be easily produced has been demanded.

### Means for Solving the Problem

The inventors of the present invention have conducted intensive research to achieve the above object and, as a result, found that surface-modified fine fibers can be easily prepared by mixing a fluorine-containing highly branched polymer with a thermoplastic resin that is a matrix polymer, and performing electrostatic spinning. Thus, the present invention has now been completed.

That is, as a first aspect, the present invention relates to surface-modified fine fibers having an average diameter of 50 to 2,000 nm and formed by an electrospinning method from a spinning material that is a resin composition including a fluorine-containing highly branched polymer (a) and a thermoplastic resin (b) in which the fluorine-containing highly branched polymer (a) is formed by polymerizing a monomer A containing two or more radically polymerizable double bonds per molecule and a monomer B containing a fluoroalkyl group and at least one radically polymerizable double bond per molecule in the presence of 5 to 200 mol% of a polymerization initiator C relative to the total number of moles of the monomer A and the monomer B; the monomer A is a divinyl compound or a di(meth)acrylate compound; and the monomer B is a vinyl compound or a (meth)acrylate compound. As a second aspect, the present invention relates to the fine fibers according to the first aspect, in which the monomer A is ethylene glycol di(meth)acrylate or divinylbenzene.

As a third aspect, the present invention relates to the fine fibers according to the first aspect, in which the monomer B is a compound of Formula [1]: 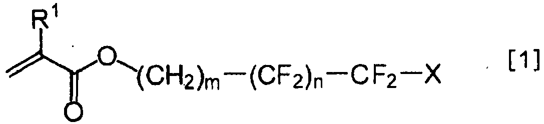 (where R¹ is a hydrogen atom or a methyl group, X is a hydrogen atom or a fluorine atom, m is 1 or 2, and n is an integer of 0 to 5).

As a fourth aspect, the present invention relates to the fine fibers according to any one of the first aspect to the third aspect, in which the polymerization initiator C is an azo polymerization initiator, preferably dimethyl 2,2'-azobisisobutyrate.

As a fifth aspect, the present invention relates to the fine fibers according to any one of the first aspect to the fourth aspect, in which the content of the fluorine-containing highly branched polymer (a) is 0.1 to 20 parts by mass relative to 100 parts by mass of the thermoplastic resin (b).

As a sixth aspect, the present invention relates to the fine fibers according to any one of the first aspect to the fifth aspect, in which the thermoplastic resin (b) is a poly(methyl methacrylate) resin a poly(lactic acid) resin or a polyurethane resin.

As a seventh aspect, the present invention relates to the fine fibers according to any one of the first aspect to the sixth aspect characterized in that a surface portion of the fine fibers contains a higher proportion of the fluorine-containing highly branched polymer (a) than in an interior portion of the fine fibers.

As a eighth aspect, the present invention relates to a method for producing surface-modified fine fibers having an average diameter of 50 to 2,000 nm and characterized by forming the fine fibers by an electrospinning method from a spinning material that is a resin composition including a fluorine-containing highly branched polymer (a) and a thermoplastic resin (b) in which the fluorine-containing highly branched polymer (a) is formed by polymerizing a monomer A containing two or more radically polymerizable double bonds per molecule and a monomer B containing a fluoroalkyl group and at least one radically polymerizable double bond per molecule in the presence of 5 to 200 mol% of a polymerization initiator C relative to the total number of moles of the monomer A and the monomer B.

As a ninth aspect, the present invention relates to a method for modifying the surface of fine fibers having an average diameter of 50 to 2,000 nm and characterized by including: during formation of the fine fibers by an electrospinning method from a material that is a thermoplastic resin (b), adding a fluorine-containing highly branched polymer (a) to the thermoplastic resin wherein the fluorine-containing highly branched polymer (a) is formed by polymerizing a monomer A containing two or more radically polymerizable double bonds per molecule and a monomer B containing a fluoroalkyl group and at least one radically polymerizable double bond per molecule in the presence of 5 to 200 mol% of a polymerization initiator C relative to the total number of moles of the monomer A and the monomer B.

### Effects of the Invention

The fluorine-containing highly branched polymer used in forming the fine fibers of the present invention has a branched structure that is intentionally added, leading to low entanglement to be occurred between the molecules than in a linear polymer, and therefore behaves as a fine particle. In other words, movement thereof in a resin that is a matrix is easily done. Because of this, by adding a fluorine-containing highly branched polymer to a matrix resin to form a fiber, surface-modified fine fibers having an average diameter of 50 to 2,000 nm can be easily obtained in which the fluorine-containing highly branched polymer can easily segregate to the interface (the surface of the fiber) to contribute to the control of the interface.

The fine fibers of the present invention can thus be formed as surface-modified fine fibers, and therefore can be a fiber excellent in water repellency, oil repellency, and antifouling property.

### BRIEF DESCRIPTION OF THE DRAWINGS

[FIG. 1] FIG. 1 indicates a ¹H NMR spectrum of a highly branched polymer 1 produced in Synthesis Example 1.
[FIG. 2] FIG. 2 indicates a ¹³C NMR spectrum of the highly branched polymer 1 produced in Synthesis Example 1.
[FIG. 3] FIG. 3 indicates a ¹H NMR spectrum of a highly branched polymer 2 produced in Synthesis Example 2.
[FIG. 4] FIG. 4 indicates a ¹³C NMR spectrum of the highly branched polymer 2 produced in Synthesis Example 2.
[FIG. 5] FIG. 5 indicates a scanning electron microscope photograph of a fine fiber mat (PLA: highly branched polymer 1 = 100:10) produced in Example 1.
[FIG. 6] FIG. 6 indicates a scanning electron microscope photograph of a fine fiber mat (PLA) produced in Comparative Example 1.
[FIG. 7] FIG. 7 indicates a scanning electron microscope photograph of a fine fiber mat (PMMA: highly branched polymer 1 = 100:1) produced in Example 2.
[FIG. 8] FIG. 8 indicates a scanning electron microscope photograph of a fine fiber mat (PMMA: highly branched polymer 1 = 100:3) produced in Example 2.
[FIG. 9] FIG. 9 indicates a scanning electron microscope photograph of a fine fiber mat (PMMA: highly branched polymer 1 = 100:5) produced in Example 2.
[FIG. 10] FIG. 10 indicates a scanning electron microscope photograph of a fine fiber mat (PMMA) produced in Comparative Example 2.
[FIG. 11] FIG. 11 indicates a scanning electron microscope photograph of a fine fiber mat (PUE: highly branched polymer 2 = 99: 1) produced in Example 3.
[FIG. 12] FIG. 12 indicates a scanning electron microscope photograph of a fine fiber mat (PUE: highly branched polymer 2 = 95:5) produced in Example 3.
[FIG. 13] FIG. 13 indicates a scanning electron microscope photograph of a fine fiber mat (PUE: highly branched polymer 2 = 90:10) produced in Example 3.
[FIG. 14] FIG. 14 indicates a scanning electron microscope photograph of a fine fiber mat (PUE) produced in Comparative Example 3.
[FIG. 15] FIG. 15 indicates a scanning electron microscope photograph of a fine fiber mat (PUE: highly branched polymer 2 = 99:1) produced in Example 4.
[FIG. 16] FIG. 16 indicates a scanning electron microscope photograph of a fine fiber mat (PUE: highly branched polymer 2 = 95:5) produced in Example 4.
[FIG. 17] FIG. 17 indicates a scanning electron microscope photograph of a fine fiber mat (PUE: highly branched polymer 2 = 90:10) produced in Example 4.
[FIG. 18] FIG. 18 indicates a scanning electron microscope photograph of a fine fiber mat (PUE) produced in Comparative Example 4.
[FIG. 19] FIG. 19 indicates a stress-strain curve of a fine fiber mat (PUE : highly branched polymer 2 = 99:1) produced in Example 4.
[FIG. 20] FIG. 20 indicates a stress-strain curve of a fine fiber mat (PUE : highly branched polymer 2 = 95:5) produced in Example 4.
[FIG. 21] FIG. 21 indicates a stress-strain curve of a fine fiber mat (PUE : highly branched polymer 2 = 90:10) produced in Example 4.
[FIG. 22] FIG. 22 indicates a stress-strain curve of a fine fiber mat (PUE) produced in Comparative Example 4.

### MODES FOR CARRYING OUT THE INVENTION

### [Surface-modified fine fibers]

Fine fibers of the present invention are surface-modified fine fibers formed by an electrospinning method from a spinning material that is a resin composition including a fluorine-containing highly branched polymer (a) and a thermoplastic resin (b).

### [Fluorine-containing highly branched polymer (a)]

The fluorine-containing highly branched polymer used in the present invention can be obtained by polymerizing a monomer A containing two or more radically polymerizable double bonds per molecule and a monomer B containing a fluoroalkyl group and at least one radically polymerizable double bond per molecule in the presence of not lower than 5 mol% and not higher than 200 mol% of a polymerization initiator C relative to the total number of moles of the monomer A and the monomer B. The fluorine-containing highly branched polymer is a so-called, initiator-fragment incorporation type highly branched polymer, and the terminal thereof has a fragment of the polymerization initiator C used in polymerization.

In the present invention, the monomer A containing two or more radically polymerizable double bonds per molecule preferably contains either or both of a vinyl group and a (meth)acrylic group, and is particularly preferably a divinyl compound or a di(meth)acrylate compound. In the present invention, a (meth)acrylate compound refers to either an acrylate compound or a methacrylate compound. For example, (meth)acrylic acid refers to either acrylic acid or methacrylic acid.

As the monomer A, organic compounds (A1) to (A7) below are exemplified:
(A1) vinyl hydrocarbons:
   (A1-1) aliphatic vinyl hydrocarbons; isoprene, butadiene, 3-methyl-1,2-butadiene, 2,3-dimethyl-1,3-butadiene, 1,2-polybutadiene, pentadiene, hexadiene, and octadiene,
   (A1-2) alicyclic vinyl hydrocarbons; cyclopentadiene, cyclohexadiene, cyclooctadiene, and norbornadiene,
   (A1-3) aromatic vinyl hydrocarbons; divinylbenzene, divinyltoluene, divinylxylene, trivinylbenzene, divinylbiphenyl, divinylnaphthalene, divinylfluorene, divinylcarbazole, and divinylpyridine,
(A2) vinyl esters, allyl esters, vinyl ethers, allyl ethers, and vinyl ketones:
   (A2-1) vinyl esters; divinyl adipate, divinyl maleate, divinyl phthalate, divinyl isophthalate, divinyl itaconate, and vinyl (meth)acrylate,
   (A2-2) allyl esters; diallyl maleate, diallyl phthalate, diallyl isophthalate, diallyl adipate, and allyl (meth)acrylate,
   (A2-3) vinyl ethers; divinyl ether, diethylene glycol divinyl ether, and triethylene glycol divinyl ether,
   (A2-4) allyl ethers; diallyl ether, diallyloxyethane, triallyloxyethane, tetraallyloxyethane, tetraallyloxypropane, tetraallyloxybutane, and tetramethallyloxyethanes,
   (A2-5) vinyl ketones; divinyl ketone, and diallyl ketone,
(A3) (meth)acrylic acid esters:
   ethylene glycol di(meth)acrylate, triethylene glycol di(meth)acrylate, propylene glycol di(meth)acrylate, neopentyl glycol di(meth)acrylate, trimethylolpropane tri(meth)acrylate, glycerol tri(meth)acrylate, pentaerythritol tetra(meth)acrylate, alkoxy titanium tri(meth)acrylate, 1,6-hexanediol di(meth)acrylate, 2-methyl-1,8-octanediol di(meth)acrylate, 1,9-nonanediol di(meth)acrylate, 1,10-decanediol di(meth)acrylate, tricyclodecane dimethanol di(meth)acrylate, dioxane glycol di(meth)acrylate, 2-hydroxy-1-acryloyloxy-3-methacryloyloxypropane, 2-hydroxy-1,3-di(meth)acryloyloxypropane, 9,9-bis[4-(2-(meth)acryloyloxyethoxy)phenyl]fluorene, undecylenoxyethylene glycol di(meth)acrylate, bis[4-(meth)acryloylthiophenyl] sulfide, bis[2-(meth)acryloylthioethyl]sulfide, 1,3-adamantanediol di(meth)acrylate, and 1,3-adamantane dimethanol di(meth)acrylate,
(A4) poly(alkylene glycol) chain-containing vinyl compounds:
   poly(ethylene glycol) (molecular weight: 300) di(meth)acrylate and poly(propylene glycol) (molecular weight: 500) di(meth)acrylate,
(A5) nitrogen-containing vinyl compounds:
   diallylamine, diallyl isocyanurate, diallyl cyanurate, methylenebis(meth)acrylamide, and bismaleimide,
(A6) silicon-containing vinyl compounds:
   dimethyldivinylsilane, divinyl(methyl)(phenyl)silane, diphenyldivinylsilane, 1,3-divinyl-1,1,3,3-tetramethyldisilazane, 1,3-divinyl-1,1,3,3-tetraphenyldisilazane, and diethoxydivinylsilane, and
(A7) fluorine-containing vinyl compounds:
   1,4-divinylperfluorobutane, 1,6-divinylperfluorohexane, and 1,8-divinylperfluorooctane

Preferable among these are (A1-3) aromatic vinyl hydrocarbon compounds, (A2) vinyl esters, allyl esters, vinyl ethers, allyl ethers, and vinyl ketones, (A3) (meth)acrylic acid esters, (A4) poly(alkylene glycol) chain-containing vinyl compounds, and (A5) nitrogen-containing vinyl compounds. Particularly preferable are divinylbenzene in (A1-3), diallyl phthalate in (A2), ethylene glycol di(meth)acrylate, 1,3-adamantane dimethanol di(meth)acrylate, and tricyclodecane dimethanol di(meth)acrylate in (A3), and methylenebis(meth)acrylamide in (A5). Among these, divinylbenzene, ethylene glycol di(meth)acrylate, and tricyclodecane dimethanol di(meth)acrylate are preferable, and divinylbenzene and ethylene glycol di(meth)acrylate are particularly preferable.

In the present invention, the monomer B containing a fluoroalkyl group and at least one radically polymerizable double bond per molecule preferably contains either at least one vinyl group or at least one (meth)acrylic group, and is particularly preferably a vinyl compound or a (meth)acrylate compound.

Particularly desirable is the compound of Formula [1].

Examples of the monomer B include 2,2,2-trifluoroethyl (meth)acrylate, 2,2,3,3,3-pentafluoropropyl (meth)acrylate, 2-(perfluorobutyl)ethyl (meth)acrylate, 2-(perfluorohexyl)ethyl (meth)acrylate, 2-(perfluorooctyl)ethyl (meth)acrylate, 2-(perfluorodecyl)ethyl (meth)acrylate, 2-(perfluoro-3-methylbutyl)ethyl (meth)acrylate, 2-(perfluoro-5-methylhexyl)ethyl (meth)acrylate, 2-(perfluoro-7-methyloctyl)ethyl (meth)acrylate, 1H,1H,3H-tetrafluoropropyl (meth)acrylate, 1H,1H,5H-octafluoropentyl (meth)acrylate, 1H,1H,7H-dodecafluoroheptyl (meth)acrylate, 1H,1H,9H-hexadecafluorononyl (meth)acrylate, 1H-1-(trifluoromethyl)trifluoroethyl (meth)acrylate, 1H,1H,3H-hexafluorobutyl (meth)acrylate, 3-perfluorobutyl-2-hydroxypropyl (meth)acrylate, 3-perfluorohexyl-2-hydroxypropyl (meth)acrylate, 3-perfluorooctyl-2-hydroxypropyl (meth)acrylate, 3-(perfluoro-3-methylbutyl)-2-hydroxypropyl (meth)acrylate, 3-(perfluoro-5-methylhexyl)-2-hydroxypropyl (meth)acrylate, and 3-(perfluoro-7-methyloctyl)-2-hydroxypropyl (meth)acrylate.

In the present invention, the proportion between the monomer A and the monomer B in copolymerization is preferably 0.05 to 3.0 mol and particularly preferably 0.1 to 1.5 mol of the monomer B to 1 mol of the monomer A from the viewpoints of reactivity and a surface modifying effect.

Preferable as the polymerization initiator C of the present invention is an azo polymerization initiator. Examples of the azo polymerization initiator include compounds (1) to (5) below:
(1) azonitrile compounds:
   2,2'-azobisisobutyronitrile, 2,2'-azobis(2-methylbutyronitrile), .
   2,2'-azobis(2,4-dimethylvaleronitrile), 1,1'-azobis(1-cyclohexanecarbonitrile),
   2,2'-azobis(4-methoxy-2,4-dimethylvaleronitrile), and 2-(carbamoylazo)isobutyronitrile,
(2) azoamide compounds:
   2,2'-azobis {2-methyl-N-[1,1-bis(hydroxymethyl)-2-hydroxyethyl]propionamide},
   2,2'-azobis{2-methyl-N-[2-(1-hydroxybutyl)]propionamide},
   2,2'-azobis[2-methyl-N-(2-hydroxyethyl)propionamide],
   2,2'-azobis[N-(2-propenyl)-2-methylpropionamide],
   2,2'-azobis(N-butyl-2-methylpropionamide), and
   2,2'-azobis(N-cyclohexyl-2-methylpropionamide),
(3) cyclic azoamidine compounds:
   2,2'-azobis[2-(2-imidazolin-2-yl)propane] dihydrochloride,
   2,2'-azobis[2-(2-imidazolin-2-yl)propane] disulfate dihydrate,
   2,2'-azobis{2-[1-(2-hydroxyethyl)-2-imidazolin-2-yl]propane}dihydrochloride, 2,2'-azobis[2-(2-imidazolin-2-yl)propane], and
   2,2'-azobis(1-imino-1-pyrrolidino-2-methylpropane) dihydrochloride,
(4) azoamidine compounds:
   2,2'-azobis(2-methylpropionamidine) dihydrochloride and
   2,2'-azobis[N-(2-carboxyethyl)-2-methylpropionamidine] tetrahydrate, and
(5) others:
   dimethyl 2,2'-azobisisobutyrate, 4,4'-azobis(4-cyanovaleric acid),
   4,4'-azobis(4-cyanovaleric acid)bis(2,2,2-trifluoroethyl), and
   2,2'-azobis(2,4,4-trimethylpentane), 1,1'-azobis(1-acetoxy-1-phenylethane).

Desirable among these azo polymerization initiators from the viewpoint of the surface energy of the resulting highly branched polymer are ones having a substituent that is relatively less polar. Preferable are dimethyl 2,2'-azobisisobutyrate, 2,2'-azobis(2,4,4-trimethylpentane), and 4,4'-azobis(4-cyanovaleric acid)bis(2,2,2-trifluoroethyl), and particularly preferable is dimethyl 2,2' -azobisisobutyrate.

The amount of the polymerization initiator C used is 5 to 200 mol%, is preferably 15 to 200 mol%, is more preferably 15 to 170 mol%, and is more preferably 50 to 100 mol%, relative to the total number of moles of the monomer A and the monomer B.

The fluorine-containing highly branched polymer used in the present invention is obtained by polymerization in the presence of a predetermined amount of the polymerization initiator C relative to the amount of the monomer A and the monomer B. Examples of a method of the polymerization include known methods such as solution polymerization, dispersion polymerization, precipitation polymerization, and bulk polymerization, and among these, solution polymerization or precipitation polymerization is preferable. In terms of, among others, molecular weight control, the reaction is preferably performed by solution polymerization in an organic solvent.

Examples of this organic solvent include aromatic hydrocarbon solvents such as benzene, toluene, xylene, ethylbenzene, and tetralin; aliphatic or alicyclic hydrocarbon solvents such as n-hexane, n-heptane, mineral spirits, and cyclohexane; halogen solvents such as methyl chloride, methyl bromide, methyl iodide, methylene dichloride, chloroform, carbon tetrachloride, trichloroethylene, perchloroethylene, and o-dichlorobenzene; ester solvents or ester ether solvents such as ethyl acetate, butyl acetate, methoxybutyl acetate, methyl cellosolve acetate, ethyl cellosolve acetate, and propylene glycol monomethyl ether acetate; ether solvents such as diethyl ether, tetrahydrofuran, 1,4-dioxane, methyl cellosolve, ethyl cellosolve, butyl cellosolve, and propylene glycol monomethyl ether; ketone solvents such as acetone, methyl ethyl ketone, isobutyl methyl ketone, di-n-butyl ketone, and cyclohexanone; alcoholic solvents such as methanol, ethanol, n-propanol, isopropanol, n-butanol, isobutanol, tert-butanol, 2-ethylhexyl alcohol, and benzyl alcohol; amide solvents such as N,N-dimethylformamide and N,N-dimethylacetamide; sulfoxide solvents such as dimethylsulfoxide; heterocyclic compound solvents such as N-methyl-2-pyrrolidone, and mixed solvents of two or more of these.

Preferable among these are aromatic hydrocarbon solvents, halogen solvents, ester solvents, ether solvents, ketone solvents, alcoholic solvents, amide solvents, sulfoxide solvents, and the like, and particularly preferable are toluene, xylene, o-dichlorobenzene, butyl acetate, propylene glycol monomethyl ether acetate, propylene glycol monomethyl ether, 1,4-dioxane, methyl cellosolve, isobutyl methyl ketone, N,N-dimethylformamide, N,N-dimethylacetamide, and the like.

In the case where the polymerization reaction is performed in the presence of an organic solvent, the amount of the organic solvent in the whole polymerization reaction system is preferably 1 to 100 parts by mass and is further preferably 5 to 50 parts by mass relative to 1 part by mass of the monomers.

The polymerization reaction is performed at normal pressure, under pressure with being hermetically sealed, or under reduced pressure, is preferably performed at normal pressure in order to ensure simplicity of the device to be used and the process, and is preferably performed in an atmosphere of an inert gas such as N₂.

The temperature during the polymerization reaction is preferably 50 to 200°C and is further preferably 70 to 150°C or 70 to 130°C.

The polymerization reaction is more preferably performed at a temperature that is higher than the 10-hour half-life temperature of the polymerization initiator C by 20°C or more. More specifically, the polymerization reaction is preferably performed by adding a solution containing the monomer A, the monomer B, the polymerization initiator C, and the organic solvent dropwise to the organic solvent that is maintained at a temperature that is higher than the 10-hour half-life temperature of the polymerization initiator C by 20°C or more.

The polymerization reaction is further more preferably performed at the reflux temperature of the organic solvent under a reaction pressure.

After the completion of the polymerization reaction, the resulting fluorine-containing highly branched polymer is recovered by a suitable method, followed by performing additional treatment such as washing, where appropriate. Examples of a method of recovering the polymer from the reaction solution include methods such as reprecipitation.

The weight average molecular weight (hereinafter, abbreviated as Mw) of the resulting fluorine-containing highly branched polymer measured by gel permeation chromatography (GPC) in terms of polystyrene is preferably 1,000 to 200,000, is further preferably 2,000 to 100,000, and is most preferably 5,000 to 60,000.

### [Thermoplastic resin (b)]

The thermoplastic resin used in the present invention is not particularly limited, and examples thereof include polyolefin resins such as PE (polyethylene), PP (polypropylene), EVA (ethylene-vinyl acetate copolymer), EVOH (ethylene-vinyl alcohol copolymer), PVA (poly(vinyl alcohol)), EEA (ethylene-ethyl acrylate copolymer), and PVDF (poly(vinylidene fluoride)); polystyrene resins such as PS (polystyrene), HIPS (high-impact polystyrene), AS (acrylonitrile-styrene copolymer), ABS

(acrylonitrile-butadiene-styrene copolymer), and MS (methyl methacrylate-styrene copolymer); polycarbonate resins; vinyl chloride resins; polyamide resins; polyimide resins; polyurethane resins such as PUE (polyurethane elastomer); (meth)acrylic resins such as PMMA (poly(methyl methacrylate)); PAN(polyacrylonitrile); polyester resins such as PET (poly(ethylene terephthalate)), poly(butylene terephthalate), poly(ethylene naphthalate), poly(butylene naphthalate), PLA (poly(lactic acid)), poly(3-hydroxybutyric acid), polycaprolactone, poly(butylene succinate), and poly(ethylene succinate/adipate); PEO (poly(ethylene oxide)); poly(phenylene ether) resins; modified poly(phenylene ether) resins; polyacetal resins; polysulfone resins; poly(phenylene sulfide) resins; poly(vinyl alcohol) resins; poly(glycolic acid); modified starch; cellulose acetate and cellulose triacetate; chitin and chitosan; and lignin.

Preferable among these are poly(methyl methacrylate) resins, poly(lactic acid) resins, and polyurethane elastomer resins.

### [Resin composition]

In the resin composition including the fluorine-containing highly branched polymer (a) and the thermoplastic resin (b) used in the present invention, the amount of the fluorine-containing highly branched polymer (a) relative to 100 parts by mass of the thermoplastic resin (b) is preferably 0.1 to 20 parts by mass and is particularly preferably 1 to 10 parts by mass.

### [Method of producing fine fibers

The fine fibers of the present invention are produced by an electrospinning method from a spinning material that is the resin composition including the fluorine-containing highly branched polymer (a) and the thermoplastic resin (b), and is actually produced by dissolving or dispersing the composition in a solvent to form a varnish and then performing electrostatic spinning.

In forming the fine fibers by this method or by an electrospinning method from a material that is the thermoplastic resin (b), a method for modifying the surface of the fine fibers by adding the fluorine-containing highly branched polymer (a) to the thermoplastic resin is also within the scope of the present invention.

The solvent used in electrostatic spinning has only to dissolve the fluorine-containing highly branched polymer and the thermoplastic resin, and examples thereof include acetone, ethyl methyl ketone (MEK), isobutyl methyl ketone (MIBK), chloroform, tetrahydrofuran (THF), 1,4-dioxane, toluene, xylene, N,N-dimethylformamide (DMF), N,N-dimethylacetamide (DMAc), N-methyl-2-pyrrolidone (NMP), cyclohexanone, propylene glycol monomethyl ether (PGME), propylene glycol monomethyl ether acetate (PGMEA), propylene glycol monoethyl ether, ethyl lactate, diethylene glycol monoethyl ether, butyl cellosolve, ethanol, hexafluoroisopropanol (HFIP), γ-butyrolactone, formic acid, acetic acid, and trifluoroacetic acid. The solvent may be used alone or as a mixture of two or more of these.

The dissolving or dispersing in the solvent may be performed at any concentration, which, however, is 1 to 20% by mass, is preferably 2 to 15% by mass, and is more preferably 3 to 10% by mass, relative to the total mass (the sum of the mass) of the fluorine-containing highly branched polymer, the thermoplastic resin, and the solvent.

In electrostatic spinning, a commercially available electrospinning device can be used.

The spinning condition is selected as needed, and includes, for example, a nozzle length of 3 to 5 cm, a spinning distance (distance between an electrode and a collector) of 5 to 15 cm, a spinning amount of 1.0 to 5.0 mL/hour, and voltage applied between electrodes of 5 to 30 kV.

The average diameter of the fine fibers thus obtained is preferably 50 to 2,000 nm and is more preferably 100 to 1,000 nm.

As described above, the fine fibers of the present invention contain more of the fluorine-containing highly branched polymer on the surface portion (interface) of the fiber than in the interior portion (deep portion) of the fiber, and therefore can be fine fibers excellent in water repellency, oil repellency, and antifouling property.

### Examples

The present invention will be described more specifically by examples. The scope of the present invention is, however, not limited to these examples.

The devices and conditions used in preparation and physical property analysis of samples in the examples are as follows.

(1) Gel permeation chromatography (GPC)
   Apparatus: HLC-8220 GPC manufactured by Tosoh Corporation
   Column: Shodex KF-804 L + KF-805 L
   Column temperature: 40°C
   Solvent: tetrahydrofuran
   Detector: RI
(2) ¹H NMR spectrum
   Apparatus: JNM-ECA700 manufactured by JEOL Datum, Ltd.
   Solvent: CDCl₃
   Internal standard: tetramethylsilane (0.00 ppm)
(3) ¹³C NMR spectrum
   Apparatus: JNM-ECA700 manufactured by JEOL Datum, Ltd.
   Solvent: CDCl₃
   Reference: CHCl₃ (77.0 ppm)
(4) Ion chromatography (F quantitative analysis)
   Apparatus: ICS-1500 manufactured by Dionex Japan
   Solvent: 2.7 mmol/L of Na₂CO₃ + 0.3 mmol/L of NaHCO₃
   Detector: electric conductivity
(5) Measurement of glass transition temperature (Tg)
   Device: Diamond DSC manufactured by PerkinElmer, Inc.
   Measurement condition: in a nitrogen atmosphere
   Temperature raising rate: 5°C/minute (25-160°C)
(6) Measurement of 5% weight loss temperature (Td_{5%})
   Device: TG8120 manufactured by Rigaku Corporation
   Measurement condition: in an air atmosphere
   Temperature raising rate: 10°C/minute (25-500°C)
(7) Ellipsometry (measurement of refractive index and film thickness)
   Device: EC-400 manufactured by J. A. Woollam
(8) Measurement of contact angle
   Device: VCA Optima manufactured by AST Products, Inc.
   Measurement temperature: 20°C
(9) Spin coater
   Device: MS-A100 manufactured by MIKASA CO., LTD.
(10) Hot plate
   Device: MH-180CS and MH-3CS manufactured by As One Corporation
(11) Electrospinning
   Infusion pump (syringe pump): FP-W-100 manufactured by Melquest Ltd.
   High-voltage power supply: HR-40R0.75 manufactured by Matsusada Precision Inc.
(12) Scanning electron microscope (SEM)
   Apparatus: JSM-7400 manufactured by JEOL Ltd.
   Accelerating voltage: 1.0 kV
(13) X-ray photoelectron spectroscopy (XPS)
   Apparatus: PHI Quantera SXM manufactured by ULVAC-PHI, Inc.
   X-ray: Line Al Ka 1486.6 eV (25 W, 15 kV)
   Photoelectron take-off angle: 45 degrees
(14) Test of water vapor permeability
   Device: a thermo-hygrostat PLATINOUS RAINBOW PR-2G manufactured by ESPEC Corp.
(15) Test of water pressure resistance
   Device 1 (Example 6): a water penetration tester No.828 for woven textile manufactured by Toyo Seiki Seisaku-sho, Ltd.
   Device 2 (Comparative Example 6): a manual water proof tester No.169 manufactured by YASUDA SEIKI SEISAKUSHO, LTD.
(16) Tensile test
   Device: TENSILON UTM-III-500 manufactured by ORIENTEC Co., Ltd.
Abbreviations mean as follows.
   EGDMA: ethylene glycol dimethacrylate [manufactured by Shin Nakamura Chemical Co., Ltd., trade name: 1G]
   DVB: divinylbenzene [manufactured by Nippon Steel Chemical Co., Ltd., trade name: DVB-960]
   C6FA: 2-(perfluorohexyl)ethyl acrylate [manufactured by Daikin Chemical Sales, Ltd., trade name: R-1620]
   MAIB: dimethyl 2,2'-azobisisobutyrate [manufactured by Otsuka Chemical Co., Ltd., trade name: MAIB]
   AF-1: bis(2,2,2-trifluoroethyl) 4,4'-azobis(4-cyanovalerate) [manufactured by Wako Pure Chemical Industries, Ltd., trade name: ACVA-TFE]
   PLA: poly(lactic acid) [manufactured by NatureWorks LLC, trade name: 6251D, Mw (GPC): 96,000]
   PMMA: poly(methyl methacrylate) [manufactured by NACALAI TESQUE, INC., trade name: methyl methacrylate polymer, Mw (GPC): 800,000]
   PUE: polyurethane elastomer [manufactured by Nippon Miractran Company Limited, trade name: P22SRNAT, Mw (GPC): 160,000]
   THF: tetrahydrofuran
   MIBK: isobutyl methyl ketone
   DMF: N,N-dimethylformamide
   PGMEA: propylene glycol monomethyl ether acetate

### <Synthesis Example 1: synthesis of fluorine-containing highly branched polymer 1>

32 g of toluene was placed in a 200-mL reaction flask, into which nitrogen was flowed for 5 minutes with stirring, followed by heating to reflux of toluene (internal temperature: about 110°C).

In a 100-mL reaction flask, 4.0 g (20 mmol) of a difunctional monomer EGDMA, 4.2 g (10 mmol) of a fluoromonomer C6FA, 2.3 g (10 mmol) of a polymerization initiator MAIB, and 32 g of toluene were placed. Nitrogen was flowed into the resulting mixture for 5 minutes with stirring to perform replacement with nitrogen, followed by cooling to 0°C in an ice bath.

The content of the 100-mL reaction flask containing EGDMA, C6FA, and MAIB was added dropwise to toluene at reflux in the 200-mL reaction flask with a dropping pump over 30 minutes. After the completion of dropwise addition, stirring continued for 1 hour.

The reaction mixture was added to 277 g of hexane/toluene (volume ratio = 4:1) to precipitate a polymer as slurry. The slurry was filtrated under reduced pressure, and the resulting crude product was redissolved in 36 g of THF. The polymer solution in THF was added to 277 g of hexane to reprecipitate a polymer as slurry. The slurry was filtrated under reduced pressure, followed by vacuum drying to obtain 4.9 g of a desired highly branched polymer 1 as a white powder.

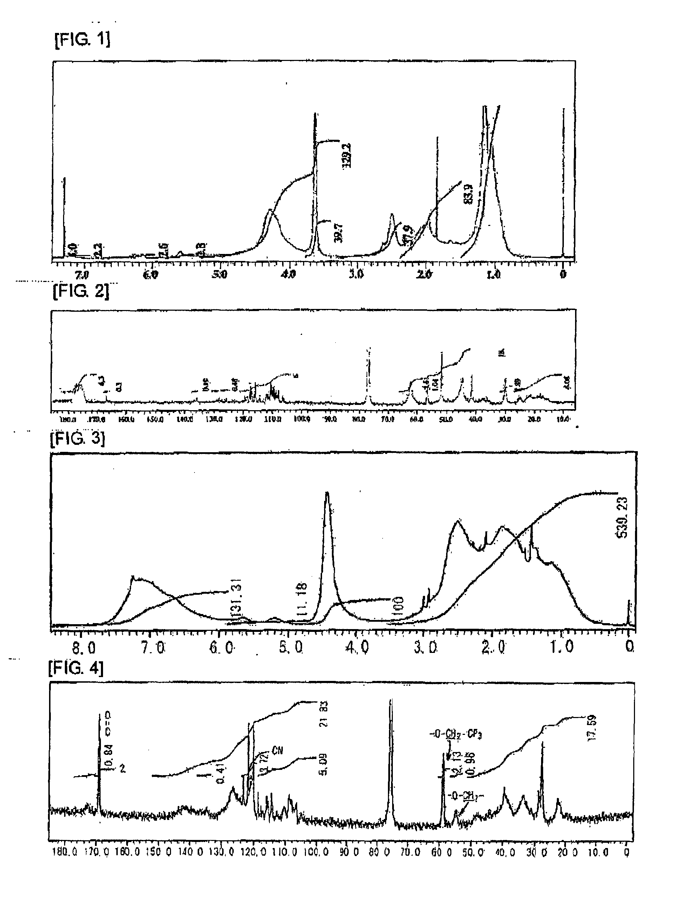

The ¹H NMR spectrum of the resulting highly branched polymer 1 is shown in FIG. 1, and the ¹³C NMR spectrum of the same is shown in FIG. 2.

The weight average molecular weight Mw of the resulting highly branched polymer 1 measured by GPC in terms of polystyrene was 17,000, and the degree of distribution, Mw (weight average molecular weight)/Mn (number average molecular weight), of the same was 2.2.

The amount of introduced fluoromonomer determined from the ¹³C NMR spectrum was 25 mol%, and the content of fluorine atom determined from the fluorine quantitative analysis by ion chromatography was 25% by mass.

### <Synthesis Example 2: synthesis of fluorine-containing highly branched polymer 2>

173 g of MIBK was placed in a 1-L reaction flask, into which nitrogen was flowed for 5 minutes with stirring, followed by heating to reflux of MIBK (internal temperature: about 116°C).

In a 300-mL reaction flask, 9.1 g (70 mmol) of a difunctional monomer DVB, 14.6 g (35 mmol) of a fluoromonomer C6FA, 24.9 g (56 mmol) of a polymerization initiator AF-1, and 173 g of MIBK were placed. Nitrogen was flowed into the resulting mixture for 5 minutes with stirring to perform replacement with nitrogen, followed by cooling to 0°C in an ice bath.

The content of the 300-mL reaction flask containing DVB, C6FA, and AF-1 was added dropwise to MIBK at reflux in the 1-L reaction flask with a dropping pump over 30 minutes. After the completion of dropwise addition, stirring continued for 1 hour.

Then, 310 g of MIBK was distilled off from the reaction mixture with a rotary evaporator, followed by adding the resultant to 638 g of hexane/ethanol (weight ratio = 10:1) to precipitate a polymer. After decantation of the supernatant, the residue was redissolved in 36 g of THF. The polymer solution in THF was added to 638 g of hexane/ethanol (weight ratio = 10:1) to precipitate a polymer. After decantation to remove the supernatant, the residue was redissolved in 36 g of THF, followed by distilling off under reduced pressure and vacuum drying to obtain 32.6 g of a desired highly branched polymer 2 as a white powder.

The ¹H NMR spectrum of the resulting highly branched polymer 2 is shown in FIG. 3, and the ¹³C NMR spectrum of the same is shown in FIG. 4.

The weight average molecular weight Mw of the resulting highly branched polymer 2 measured by GPC in terms of polystyrene was 9,900, and the degree of distribution Mw/Mn was 2.2.

### <Reference Example 1: solubility of highly branched polymer in organic solvent>

10 mg of each of the highly branched polymers 1 and 2 obtained in Synthesis Examples 1 and 2 was added to 90 mg of an organic solvent shown in Table 1 to evaluate the solubility of the highly branched polymer in the organic solvent. The results obtained are shown in Table 1 as well.

### [Evaluation criterion]

**[Table 1]**

| Highly branched polymer | Acetone | THF | Toluene | DMF | Hexane | Methanol | Water |
|---|---|---|---|---|---|---|---|
| Highly branched polymer 1 | ○ | ○ | ○ | ○ | × | × | × |
| Highly branched polymer 2 | ○ | ○ | × | ○ | × | × | × |

| | | | | | | | |
|---|---|---|---|---|---|---|---|
| ○: completely dissolved, ×: not completely dissolved | | | | | | | |

### <Reference Example 2: evaluation of physical properties of highly branched polymer>

0.25 g of each of the highly branched polymers 1 and 2 obtained in Synthesis Examples 1 and 2 was dissolved in 4.75 g of PGMEA, followed by filter filtration to prepare a varnish containing the highly branched polymer. A silicon wafer was spin coated (slope: 5 seconds, 2,000 rpm: 30 seconds, slope: 5 seconds) with the varnish, and heat treatment was performed for 30 minutes on a hot plate at 100°C to evaporate the solvent for film formation.

The refractive index of the resulting thin film at a wavelength of 633 nm, and the contact angle with either of water and diiodomethane were evaluated. From the contact angle result, surface energy was calculated. The glass transition temperature Tg and the 5% weight loss temperature Td_{5%} of the powder of each highly branched polymer were also measured. The results obtained are shown in Table 2 as well.

**[Table 2]**

| Highly branched polymer | Tg [°C] | Td_{5%} [°C] | Film thickness [nm] | Refractive index [633 nm] | Contact angle [°] | | Surface free energy [mJ/m²] |
|---|---|---|---|---|---|---|---|
| | | | | | H₂O | CH₂I₂ | |
| Highly branched polymer 1 | 80 | 272 | 107 | 1.452 | 104 | 76 | 19.6 |
| Highly branched polymer 2 | 96 | 318 | 154 | 1.475 | 108 | 85 | 15.2 |

### <Example 1: preparation of surface-modified PLA fine fiber mat>

PLA and the highly branched polymer 1 obtained in Synthesis Example 1 were mixed so as to achieve mass ratios, PLA : highly branched polymer 1, of 100:5 and 100:10. Each mixture was completely dissolved in chloroform/acetone (volume ratio = 7:3) to prepare a varnish with a solid (PLA and the highly branched polymer 1) content of 7.3% by mass.

The resulting varnish was spun by an electrospinning device under a condition of an applied voltage of 12 kV, a spinning distance of 15 cm, and a spinning amount of 1.0 mL/hour to prepare a fine fiber mat.

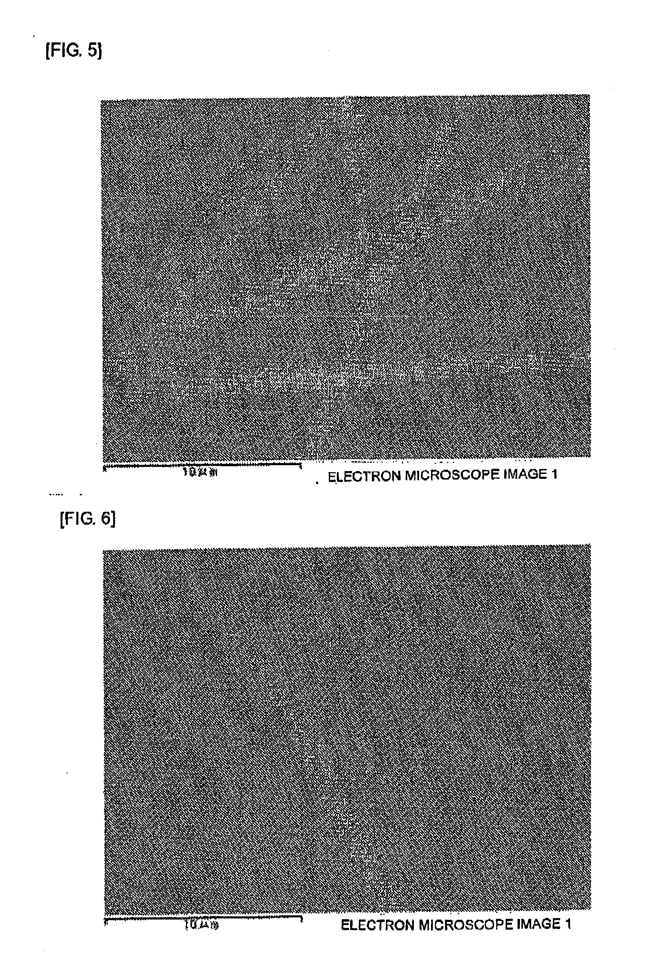

SEM observation of the resulting fine fiber mat identified fine fibers with a diameter of about 100 to 1,000 nm. An SEM photograph of the fine fiber mat of PLA: highly branched polymer 1 = 100:10 is shown in FIG. 5.

The water and diiodomethane contact angle of each fine fiber mat, and the concentration (molar fraction) of fluorine atoms on the surface measured by XPS are shown in Table 3. "Theoretical value" of "concentration of F atoms on surface" in Table 3 refers to the concentration of fluorine atoms regarding the composition of PLA and the highly branched polymer 1 that form the fine fibers to be spatially uniform, namely the concentration of the highly branched polymer 1 to be consistent throughout the fine fibers.

### <Comparative Example 1>

A fine fiber mat formed from PLA alone was prepared in the same manner as in Example 1 except that no highly branched polymer 1 was used.

An SEM photograph of the resulting fine fiber mat is shown in FIG. 6, and the water contact angle of the fine fiber mat and the concentration of fluorine atoms on the surface measured by XPS are shown in Table 3. [Table 3]

| | PLA/highly branched polymer 1 | Contact angle [°] | | Concentration of F atoms on surface [%] | |
|---|---|---|---|---|---|
| | | H₂O | CH₂I₂ | XPS measurement | Theoretical value |
| Example 1 | 100/10 | 152 | 139 | 15 | 2 |
| | 100/5 | 145 | 138 | 11 | 1 |
| Comparative Example 1 | 100/0 | 142 | Unmeasurable | <0.1 | 0 |

As shown in Table 3, it was confirmed that the fine fiber mat (Example 1) formed from PLA with the highly branched polymer 1 added thereto was improved in the contact angle with either of water and diiodomethane compared to the case of the fine fiber mat (Comparative Example 1) formed from PLA alone with no highly branched polymer 1, and was modified on the surface with a minimal amount of the highly branched polymer 1 added.

The concentration of fluorine atoms on the surface was significantly higher than the theoretical value, and therefore it was obvious that, in the fine fibers formed from PLA and the highly branched polymer 1, the composition of PLA and the highly branched polymer 1 was not uniform and the vicinity of the surface of the fine fibers contained more of the highly branched polymer 1, in other words, the highly branched polymer 1 was segregated in the vicinity of the surface.

### <Example 2: preparation of surface-modified PMMA fine fiber mat>

PMMA and the highly branched polymer 1 obtained in Synthesis Example 1 were mixed so as to achieve mass ratios, PMMA : highly branched polymer 1, of 100:1, 100:3, and 100:5. Each mixture was completely dissolved in DMF to prepare a varnish with a solid (PMMA and the highly branched polymer 1) content of 3.0% by mass.

The resulting varnish was spun by an electrospinning device under a condition of an applied voltage of 10 kV, a spinning distance of 20 cm, and a spinning amount of 3.0 mL/hour to prepare a fine fiber mat.

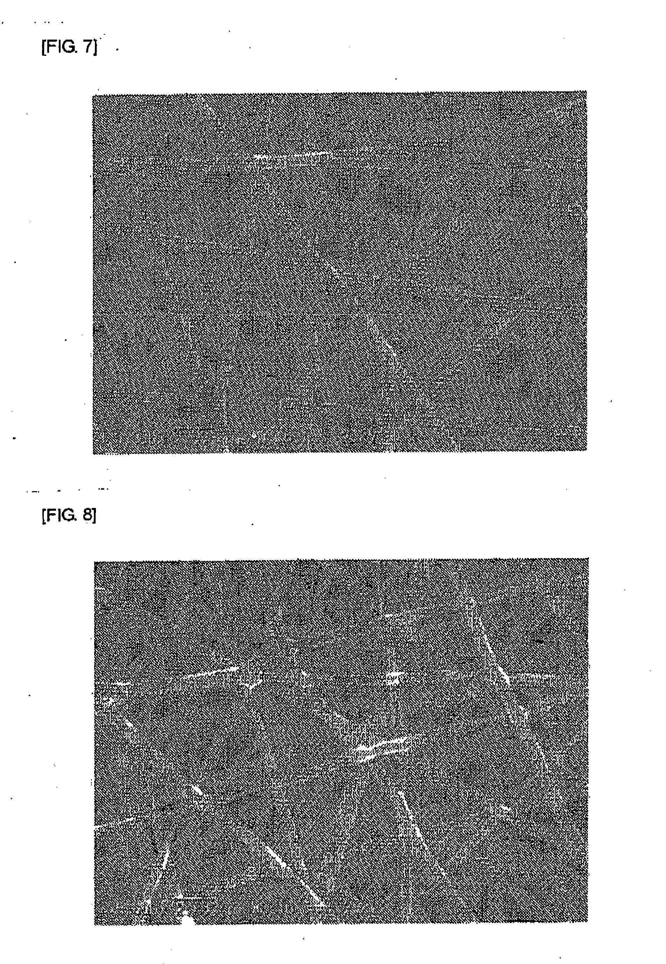

SEM observation of the resulting fine fiber mat identified fine fibers with a diameter of about 500 to 1,000 nm. An SEM photograph of each fine fiber mat is shown in FIG. 7 to FIG. 9, and the water and diiodomethane contact angle of each fine fiber mat and the concentration (molar fraction) of fluorine atoms on the surface measured by XPS are shown in Table 4. "Theoretical value" of "concentration of F atoms on surface" in Table 4 refers to the concentration of fluorine atoms regarding the composition of PMMA and the highly branched polymer 1 that form the fine fibers to be spatially uniform, namely the concentration of the highly branched polymer 1 to be consistent throughout the fine fibers.

### <Comparative Example 2>

A fine fiber mat formed from PMMA alone was prepared in the same manner as in Example 2 except that no highly branched polymer 1 was used.

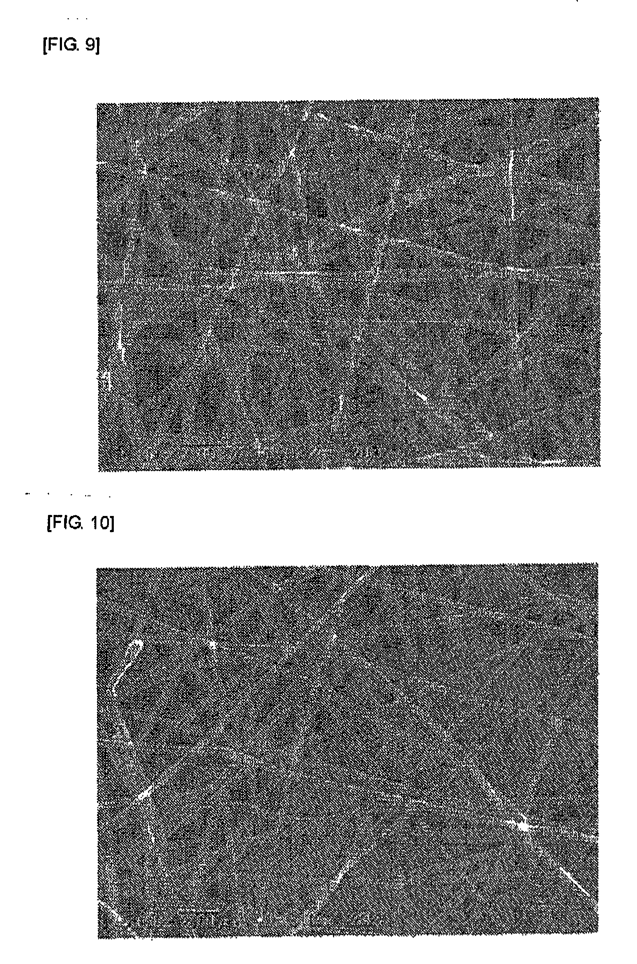

An SEM photograph of the resulting fine fiber mat is shown in FIG. 10, and the water contact angle of the fine fiber mat and water and the concentration of fluorine atoms on the surface measured by XPS are shown in Table 4.

**[Table 4]**

| | PMMA/highly branched polymer 1 | Contact angle [°] | | Concentration of F atoms on surface [%] | |
|---|---|---|---|---|---|
| | | H₂O | CH₂I₂ | XPS measurement | Theoretical value |
| Example 2 | 100/5 | 150 | 145 | 12.5 | 1.0 |
| | 100/3 | 141 | 62 | 6.7 | 0.6 |
| | 100/1 | 141 | 25 | 4.1 | 0.1 |
| Comparative Example 2 | 100/0 | 146 | Unmeasurable | <0.1 | 0 |

As shown in Table 4, it was confirmed that the fine fiber mat (Example 2) formed from PMMA with the highly branched polymer 1 added thereto was improved in the contact angle with diiodomethane compared to the case of the fine fiber mat (Comparative Example 2) formed from PMMA alone with no highly branched polymer 1, and was modified on the surface with a minimal amount of the highly branched polymer 1 added.

The concentration of fluorine atoms on the surface was significantly higher than the theoretical value, and therefore it was obvious that, in the fine fibers formed from PMMA and the highly branched polymer 1, the composition of PMMA and the highly branched polymer 1 was not uniform and the vicinity of the surface of the fine fibers contained more of the highly branched polymer 1, in other words, the highly branched polymer 1 was segregated in the vicinity of the surface.

### <Example 3: preparation 1 of surface-modified PUE fine fiber mat>

PUE and the highly branched polymer 2 obtained in Synthesis Example 2 were mixed so as to achieve mass ratios, PUE : highly branched polymer 2, of 99:1, 95:5, and 90:10. Each mixture was completely dissolved in DMF to prepare a varnish with a solid (PUE and the highly branched polymer 2) content of 20% by mass.

The resulting varnish was spun by an electrospinning device under a condition of an applied voltage of 30 kV, a spinning distance of 25 cm, and a spinning amount of 1.0 mL/hour to prepare a fine fiber mat.

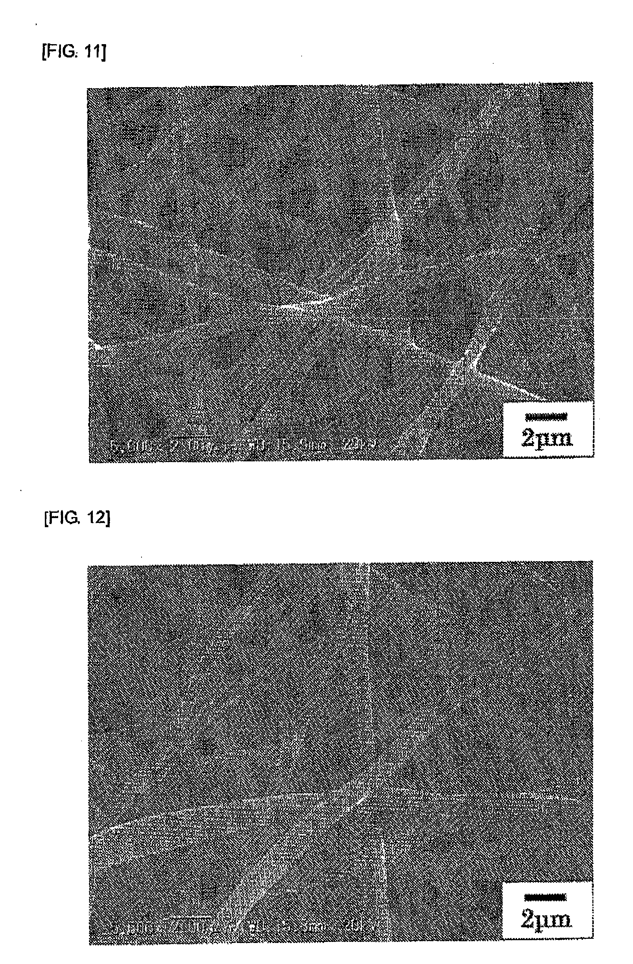

SEM observation of the resulting fine fiber mat identified fine fibers with a diameter of about 500 to 800 nm. An SEM photograph of each fine fiber mat is shown in FIG. 11 to FIG. 13.

The water and hexadecane contact angle of each fine fiber mat and the concentration (molar fraction) of fluorine atoms on the surface measured by XPS are shown in Table 5. "Theoretical value" of "concentration of F atoms on surface" in Table 5 refers to the concentration of fluorine atoms regarding the composition of PUE and the highly branched polymer 2 that form the fine fibers to be spatially uniform, namely the concentration of the highly branched polymer 2 to be consistent throughout the fine fibers.

### <Comparative Example 3>

A fine fiber mat formed from PUE alone was prepared in the same manner as in Example 3 except that no highly branched polymer 2 was used.

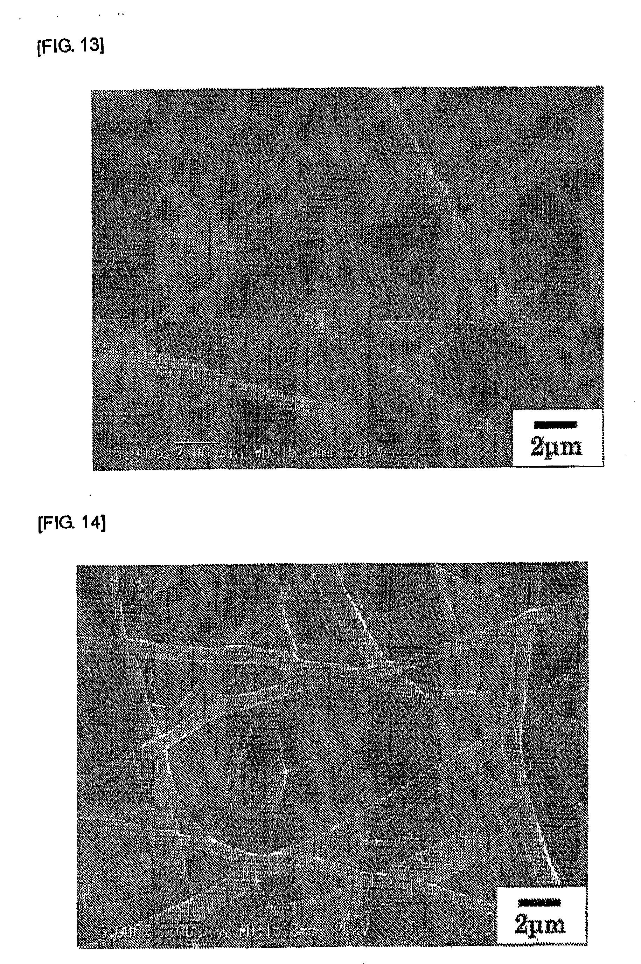

An SEM photograph of the resulting fine fiber mat is shown in FIG. 14, and the water contact angle of the fine fiber mat and the concentration of fluorine atoms on the surface measured by XPS are shown Table 5 as well.

**[Table 5]**

| | PUE/highly branched polymer 2 | Contact angle [°] | | Concentration of F atoms on surface [%] | |
|---|---|---|---|---|---|
| | | H₂O | Hexadecane | XPS measurement | Theoretical value |
| Example 3 | 90/10 | 142 | 43 | 21 | 1.0 |
| | 95/5 | 145 | 37 | 19 | 0.6 |
| | 99/1 | 136 | Unmeasurable | 12 | 0.1 |
| Comparative Example 3 | 100/0 | 126 | Unmeasurable | <0.1 | 0 |

As shown in Table 5, it was confirmed that the fine fiber mat (Example 3) formed from PUE with the highly branched polymer 2 added thereto was improved in the contact angle with either of water and hexadecane compared to the case of the fine fiber mat (Comparative Example 3) formed from PUE alone with no highly branched polymer 2, and was modified on the surface with a minimal amount of the highly branched polymer 2 added.

The concentration of fluorine atoms on the surface was significantly higher than the theoretical value, and therefore it was obvious that, in the fine fibers formed from PUE and the highly branched polymer 2, the composition of PUE and the highly branched polymer 2 was not uniform and the vicinity of the surface of the fine fibers contained more of the highly branched polymer 2, in other words, the highly branched polymer 2 was segregated in the vicinity of the surface.

### <Example 4: preparation 2 of surface-modified PUE fine fiber mat>

PUE and the highly branched polymer 2 obtained in Synthesis Example 2 were mixed so as to achieve mass ratios, PUE : highly branched polymer 2, of 99:1, 95:5, and 90:10. Each mixture was completely dissolved in DMF/ethanol (volume ratio = 9:1) to prepare a varnish with a solid (PUE and the highly branched polymer 2) content of 20% by mass.

The resulting varnish was spun by an electrospinning device under a condition of an applied voltage of 30 kV, a spinning distance of 25 cm, and a spinning amount of 2.0 mL/hour to prepare a fine fiber mat.

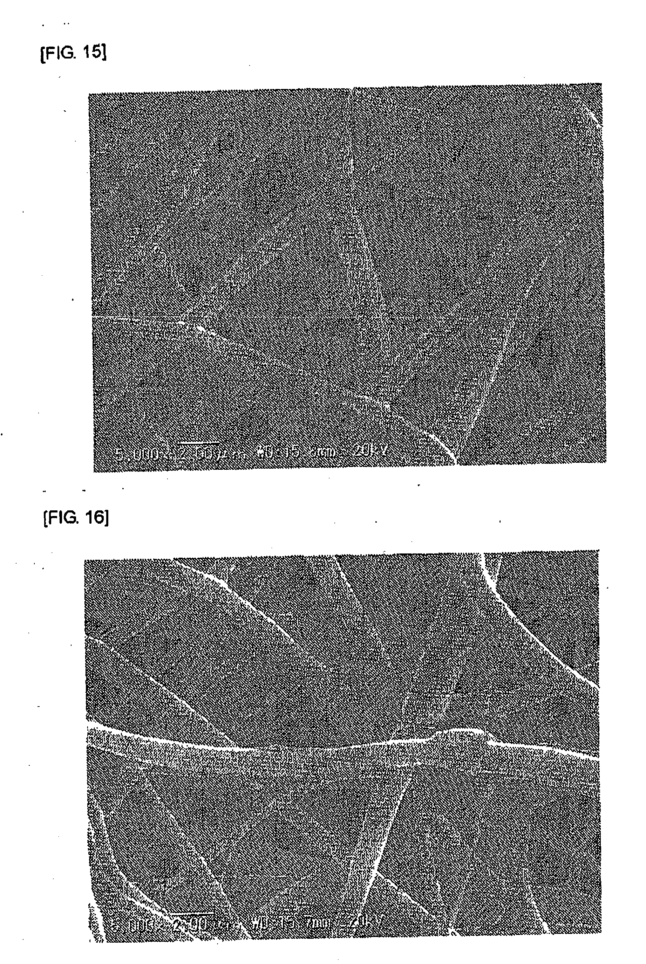

SEM observation of the resulting fine fiber mat identified fine fibers with a diameter of about 500 to 800 nm. An SEM photograph of each fine fiber mat is shown in FIG. 15 to FIG. 17.

### <Comparative Example 4>

A fine fiber mat formed from PUE alone was prepared in the same manner as in Example 4 except that no highly branched polymer 2 was used.

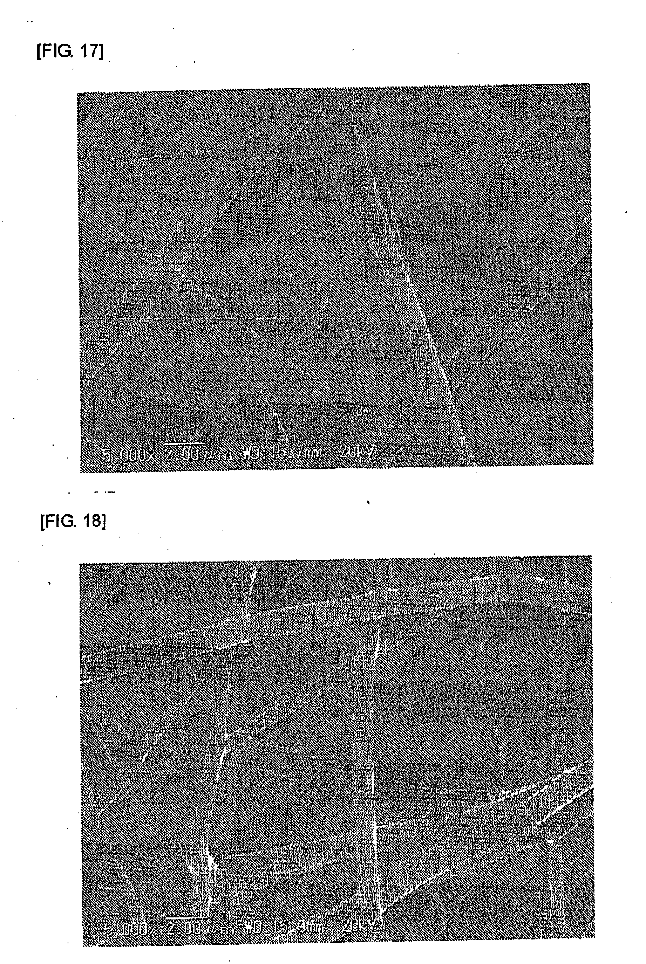

An SEM photograph of the resulting fine fiber mat is shown in FIG. 18.

### <Example 5: test of water vapor permeability of surface-modified PUE fine fiber mat>

The water vapor permeability of each PUE fine fiber mat prepared in Example 4 was measured in accordance with JIS L1099 A-2.

Each PUE fine fiber mat prepared in Example 4 was placed on a water vapor permeability cup containing 42 mL of water, and a gasket and a ring were sequentially installed, followed by fixation with nuts. The side surface to which the installation was performed was sealed with plastic adhesive tape to form a specimen. The specimen was left still standing for 30 minutes in a thermo-hygrostat at a temperature of 40 ± 2°C and at humidity of 50 ± 5%, followed by taking the specimen out to measure the mass. The specimen was left still standing in the device for another 1 hour, and was taken out to measure the variation in the mass, which was used to determine the water vapor permeability. The results are shown in Table 6.

### <Comparative Example 5: test of water vapor permeability of PUE fine fiber mat>

Water vapor permeability was determined in the same manner as in Example 5 except for using the PUE fine fiber mat prepared in Comparative Example 4 instead of the PUE fine fiber mat prepared in Example 4. The result is shown in Table 6 as well.

**[Table 6]**

| | PUE/highly branched polymer 2 | Mat thickness [µm] | Water vapor permeability [g/(m²·24h)] |
|---|---|---|---|
| Example 5 | 90/10 | 4.1 | 6.307 |
| | 95/5 | 1.7 | 6.477 |
| | 99/1 | 2.7 | 6.256 |
| Comparative Example 5 | 100/0 | 6.0 | 6.697 |

As shown in Table 6, it was confirmed that the fine fiber mat (Example 5) formed from PUE with the highly branched polymer 2 added thereto had water vapor permeability that was approximately equivalent to that of the fine fiber mat (Comparative Example 5) formed from PUE alone with no highly branched polymer 2, and the water vapor permeability did not decrease by addition of the highly branched polymer 2.

### <Example 6: test of water pressure resistance of surface-modified PUE fine fiber mat>

The water pressure resistance of each PUE fine fiber mat prepared in Example 4 was measured in accordance with JIS L1092 7.1.1 A.

Each PUE fine fiber mat prepared in Example 4 was attached onto a plastic plate with holes of a diameter of about 7 cm, and the resultant was then covered with a piece of cloth to be installed in a measurement device. Water pressure was gradually increased, and the water pressure at the time when water came out of the surface of the sample at three positions was measured. The density and the water pressure resistance of each PUE fine fiber mat are shown in Table 7. The density is determined by measuring the mass of each PUE fine fiber mat per unit area.

### <Comparative Example 6: test of water pressure resistance of PUE fine fiber mat>

The water pressure resistance of the PUE fine fiber mat prepared in Comparative Example 4 was measured in accordance with JIS L1092 7.1.2 B.

The PUE fine fiber mat prepared in Comparative Example 4 was attached onto a plastic plate with holes of a diameter of about 7 cm, and the resultant was then covered with a piece of cloth to be installed in a measurement device. Water pressure was gradually increased, and the water pressure at the time when water came out of the surface of the sample at three positions was measured. The density and the water pressure resistance of the PUE fine fiber mat are shown in Table 7 as well.

**[Table 7]**

| | PUE/highly branched polymer 2 | Density [g/cm²] | Water pressure resistance [kgf/cm²] |
|---|---|---|---|
| Example 6 | 90/10 | 0.0100 | 0.50 |
| | 95/5 | 0.0100 | 0.43 |
| | 99/1 | 0.0096 | 0.30 |
| Comparative Example 6 | 100/0 | 0.0085 | 0.04 |

As shown in Table 7, it was confirmed that the fine fiber mat (Example 6) formed from PUE with the highly branched polymer 2 added thereto was significantly improved in the water pressure resistance compared to the case of the fine fiber mat (Comparative Example 6) formed from PUE with no highly branched polymer 2, and the water pressure resistance improved as the proportion of the highly branched polymer 2 increased.

### <Example 7: tensile test of surface-modified PUE fine fiber mat>

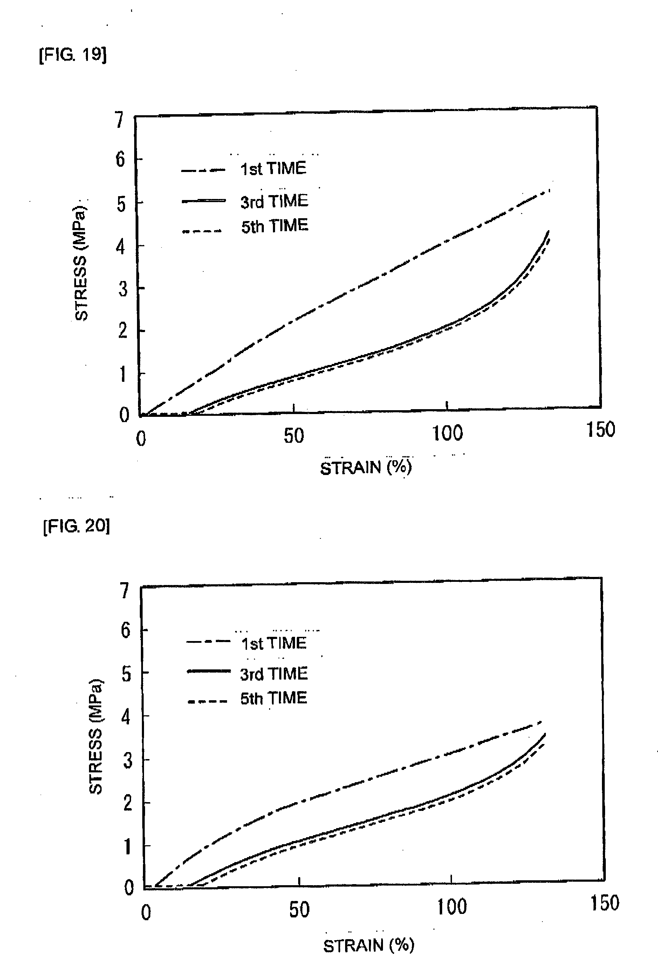

A tensile test of each PUE fine fiber mat prepared in Example 4 was performed five consecutive times at a chuck-to-chuck distance of 30 mm, a strain rate of 10 mm/minute, a maximum strain distance of 40 mm, and a return rate of 200 mm/minute. The initial moduli of elasticity are shown in Table 8. The stress-strain curves are shown in FIG. 19 to FIG. 21.

### <Comparative Example 7: tensile test of PUE fine fiber mat>

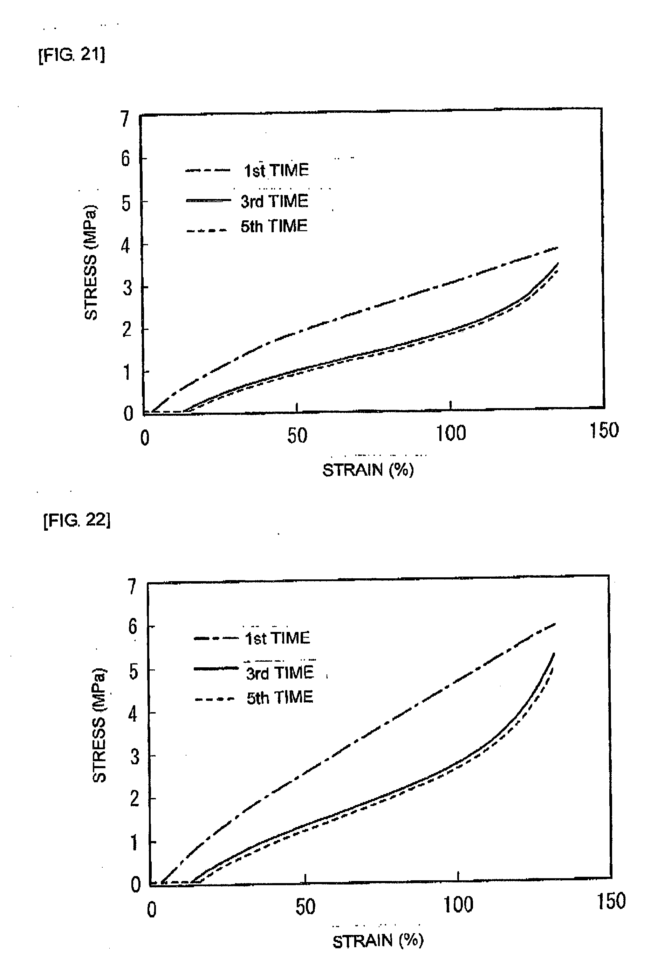

A tensile test was performed in the same manner as in Example 7 except for using the PUE fine fiber mat prepared in Comparative Example 4 instead of the PUE fine fiber mat prepared in Example 4. The initial modulus of elasticity are shown in Table 8 as well. The stress-strain curve is shown in FIG. 22.

**[Table 8]**

| | PUE/highly branched polymer 2 | Initial modulus of elasticity [MPa] | | |
|---|---|---|---|---|
| | | 1 st time | 3rd time | 5th time |
| Example 7 | 90/10 | 0.061 | 0.038 | 0.037 |
| | 95/5 | 0.060 | 0.041 | 0.041 |
| | 99/1 | 0.053 | 0.035 | 0.031 |
| Comparative Example 7 | 100/0 | 0.072 | 0.052 | 0.047 |

As shown in Table 8 and FIG. 19 to FIG. 22, it was confirmed that the fine fiber mat (Example 7) formed from PUE with the highly branched polymer 2 added thereto had mechanical properties that were approximately equivalent to these of the fine fiber mat (Comparative Example 7) formed from PUE alone with no highly branched polymer 2.

## Claims

1. Surface-modified fine fibers having an average diameter of 50 to 2,000 nm and formed by an electrospinning method from a spinning material that is a resin composition comprising a fluorine-containing highly branched polymer (a) and a thermoplastic resin (b) wherein:
the fluorine-containing highly branched polymer (a) is formed by polymerizing a monomer A containing two or more radically polymerizable double bonds per molecule and a monomer B containing a fluoroalkyl group and at least one radically polymerizable double bond per molecule in the presence of 5 to 200 mol% of a polymerization initiator C relative to the total number of moles of the monomer A and the monomer B;
the monomer A is a divinyl compound or a di(meth)acrylate compound; and
the monomer B is a vinyl compound or a (meth)acrylate compound.

2. The fine fibers according to claim 1, wherein the monomer A is ethylene glycol di(meth)acrylate or divinylbenzene

3. The fine fibers according to claim 1, wherein the monomer B is a compound of Formula [1]: 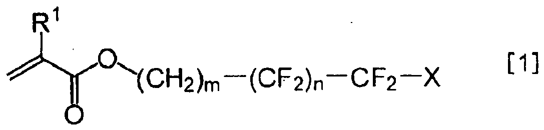 (where R¹ is a hydrogen atom or a methyl group, X is a hydrogen atom or a fluorine atom, m is 1 or 2, and n is an integer of 0 to 5).

4. The fine fibers according to any one of claims 1 to 3, wherein the polymerization initiator C is an azo polymerization initiator, preferably dimethyl 2,2'-azobisisobutyrate.

5. The fine fibers according to any one of claims 1 to 4, wherein the content of the fluorine-containing highly branched polymer (a) is 0.1 to 20 parts by mass relative to 100 parts by mass of the thermoplastic resin (b).

6. The fine fibers according to any one of claims 1 to 5, wherein the thermoplastic resin (b) is a poly(methyl methacrylate) resin, a poly(lactic acid) resin, or a polyurethane resin.

7. The fine fibers according to any one of claims 1 to 6, **characterized in that** a surface portion of the fine fibers contains a higher proportion of the fluorine-containing highly branched polymer (a) than in an interior portion of the fine fibers.

8. A method for producing surface-modified fine fibers having an average diameter of 50 to 2,000 nm **characterized by** forming the fine fibers by an electrospinning method from a spinning material that is a resin composition comprising a fluorine-containing highly branched polymer (a) and a thermoplastic resin (b) wherein
the fluorine-containing highly branched polymer (a) is formed by polymerizing a monomer A containing two or more radically polymerizable double bonds per molecule and a monomer B containing a fluoroalkyl group and at least one radically polymerizable double bond per molecule in the presence of 5 to 200 mol% of a polymerization initiator C relative to the total number of moles of the monomer A and the monomer B.

9. A method for modifying the surface of fine fibers having an average diameter of 50 to 2,000 nm **characterized by** comprising:
during formation of the fine fibers by an electrospinning method from a material that is a thermoplastic resin (b), adding a fluorine-containing highly branched polymer (a) to the thermoplastic resin, wherein:
the fluorine-containing highly branched polymer (a) is formed by polymerizing a monomer A containing two or more radically polymerizable double bonds per molecule and a monomer B containing a fluoroalkyl group and at least one radically polymerizable double bond per molecule in the presence of 5 to 200 mol% of a polymerization initiator C relative to the total number of moles of the monomer A and the monomer B.

## Patentansprüche

1. Oberflächenmodifizierte feine Fasern mit einem durchschnittlichen Durchmesser von 50 bis 2.000 nm, die durch ein Elektrospinnverfahren aus einem Spinnmaterial, welches eine Harzzusammensetzung, umfassend ein fluorhaltiges hoch verzweigtes Polymer (a) und ein thermoplastisches Harz (b), ist, gebildet wird, wobei:
das fluorhaltige hoch verzweigte Polymer (a) durch Polymerisation eines Monomers A mit zwei oder mehr radikalisch polymerisierbaren Doppelbindungen pro Molekül und eines Monomers B mit einer Fluoralkylgruppe und zumindest einer radikalisch polymerisierbaren Doppelbindung pro Molekül in der Gegenwart von 5 bis 200 mol% eines Polymerisationsinitiators C, bezogen auf die Gesamtmolzahl des Monomers A und des Monomers B, gebildet wird;
das Monomer A eine Divinylverbindung oder eine Di(meth)acrylatverbindung ist; und
das Monomer B eine Vinylverbindung oder eine (Meth)acrylatverbindung ist.

2. Feine Fasern gemäß Anspruch 1, wobei das Monomer A Ethylenglycoldi(meth)acrylat oder Divinylbenzol ist.

3. Feine Fasern gemäß Anspruch 1, wobei das Monomer B eine Verbindung der Formel [1] ist: 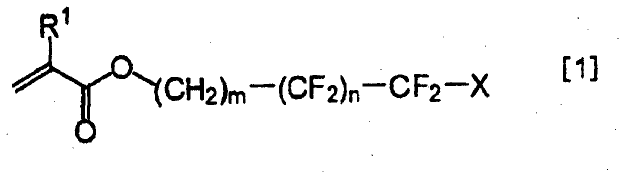 (wobei R¹ ein Wasserstoffatom oder eine Methylgruppe ist, X ein Wasserstoffatom oder ein Fluoratom ist, m 1 oder 2 ist und n eine ganze Zahl von 0 bis 5 ist).

4. Feine Fasern gemäß einem der Ansprüche 1 bis 3, wobei der Polymerisationsinitiator C ein Azo-Polymerisationsinitiator, vorzugsweise Dimethyl-2,2'-azobisisobutyrat, ist.

5. Feine Fasern gemäß einem der Ansprüche 1 bis 4, wobei der Gehalt des fluorhaltigen hoch verzweigten Polymers (a) 0,1 bis 20 Massenteile, bezogen auf 100 Massenteile des thermoplastischen Harzes (b), ist.

6. Feine Fasern gemäß einem der Ansprüche 1 bis 5, wobei das thermoplastische Harz (b) ein Poly(methylmethacrylat)-Harz, ein Poly(milchsäure)-Harz oder ein Polyurethanharz ist.

7. Feine Fasern gemäß einem der Ansprüche 1 bis 6, **dadurch gekennzeichnet, dass** ein Oberflächenbereich der feinen Fasern einen höheren Anteil des fluorhaltigen hoch verzweigten Polymers (a) als in einem Innenbereich der feinen Fasern enthält.

8. Verfahren zur Herstellung oberflächenmodifizierter feiner Fasern mit einem durchschnittlichen Durchmesser von 50 bis 2.000 nm, **dadurch gekennzeichnet, dass** die feinen Fasern durch ein Elektrospinnverfahren aus einem Spinnmaterial, welches eine Harzzusammensetzung, umfassend ein fluorhaltiges hoch verzweigtes Polymer (a) und ein thermoplastisches Harz (b), ist, hergestellt wird, wobei
das fluorhaltige hoch verzweigte Polymer (a) durch Polymerisation eines Monomers A mit zwei oder mehr radikalisch polymerisierbaren Doppelbindungen pro Molekül und eines Monomers B mit einer Fluoralkylgruppe und zumindest einer radikalisch polymerisierbaren Doppelbindung pro Molekül in der Gegenwart von 5 bis 200 mol% eines Polymerisationsinitiators C, bezogen auf die Gesamtmolzahl des Monomers A und des Monomers B, gebildet wird.

9. Verfahren zur Modifizierung der Oberfläche von feinen Fasern mit einem durchschnittlichen Durchmesser von 50 bis 2.000 nm, **dadurch gekennzeichnet, dass** es umfasst:
Zugabe eines fluorhaltigen hoch verzweigten Polymers (a) zu dem thermoplastischen Harz während der Bildung der feinen Fasern durch ein Elektrospinnverfahren aus einem Material, das ein thermoplastisches Harz (b) ist, wobei:
das fluorhaltige hoch verzweigte Polymer (a) durch Polymerisation eines Monomers A mit zwei oder mehr radikalisch polymerisierbaren Doppelbindungen pro Molekül und eines Monomers B mit einer Fluoralkylgruppe und zumindest einer radikalisch polymerisierbaren Doppelbindung pro Molekül in der Gegenwart von 5 bis 200 mol% eines Polymerisationsinitiators C, bezogen auf die Gesamtmolzahl des Monomers A und des Monomers B, gebildet wird.

## Revendications

1. Fibres fines modifiées en surface ayant un diamètre moyen de 50 à 2000 nm et formées par un procédé d'électrofilage à partir d'un matériau filable qui est une composition de résine comprenant un polymère fortement ramifié contenant du fluor (a) et une résine thermoplastique (b) dans lesquelles :
le polymère fortement ramifié contenant du fluor (a) est formé par polymérisation d'un monomère A contenant deux doubles liaisons polymérisables par voie radicalaire ou plus par molécule et d'un monomère B contenant un groupe fluoroalkyle et au moins une double liaison polymérisable par voie radicalaire par molécule en présence de 5 à 200 % en moles d'un initiateur de polymérisation C par rapport au nombre total de moles du monomère A et du monomère B ;
le monomère A est un composé divinylique ou un composé di(méth)acrylate ; et
le monomère B est un composé vinylique ou un composé de (méth)acrylate.

2. Fibres fines selon la revendication 1, dans lesquelles le monomère A est un di(méth)acrylate d'éthylène glycol ou un divinylbenzène.

3. Fibres fines selon la revendication 1, dans lesquelles le monomère B est un composé de formule [1] : 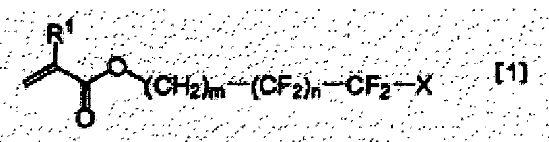 (dans laquelle R¹ est un atome d'hydrogène ou un groupe méthyle, X est un atome d'hydrogène ou un atome de fluor, m est 1 ou 2 et n est un nombre entier de 0 à 5).

4. Fibres fines selon l'une quelconque des revendications 1 à 3, dans lesquelles l'initiateur de polymérisation C est un initiateur de polymérisation azo, de préférence le 2,2'-azobisisobutyrate de diméthyle.

5. Fibres fines selon l'une quelconque des revendications 1 à 4, dans lesquelles la teneur en polymère fortement ramifié contenant du fluor (a) est de 0,1 à 20 parties en poids par rapport à 100 parties en poids de la résine thermoplastique (b).

6. Fibres fines selon l'une quelconque des revendications 1 à 5, dans lesquelles la résine thermoplastique (b) est une résine de polyméthacrylate de méthyle, une résine d'acide polylactique ou une résine de polyuréthane.

7. Fibres fines selon l'une quelconque des revendications 1 à 6, **caractérisées en ce qu'**une partie superficielle des fibres fines contient une proportion plus élevée du polymère fortement ramifié contenant du fluor (a) que dans une partie intérieure des fibres fines.

8. Procédé de production de fibres fines modifiées en surface ayant un diamètre moyen de 50 à 2000 nm, **caractérisé par** la formation des fibres fines par un procédé d'électrofilage à partir d'un matériau filable qui est une composition de résine comprenant un polymère fortement ramifié contenant du fluor (a) et une résine thermoplastique (b) dans lequel
le polymère fortement ramifié contenant du fluor (a) est formé par polymérisation d'un monomère A contenant deux doubles liaisons polymérisables par voie radicalaire ou plus par molécule et d'un monomère B contenant un groupe fluoroalkyle et au moins une double liaison polymérisable par voie radicalaire par molécule en présence de 5 à 200 % en moles d'un initiateur de polymérisation C par rapport au nombre total de moles du monomère A et du monomère B.

9. Procédé de modification de la surface des fibres fines ayant un diamètre moyen de 50 à 2000 nm, **caractérisé en ce qu'**il comprend :
pendant la formation des fibres fines par un procédé d'électrofilage à partir d'un matériau qui est une résine thermoplastique (b), l'ajout d'un polymère fortement ramifié contenant du fluor (a) à la résine thermoplastique, dans lequel
le polymère fortement ramifié contenant du fluor (a) est formé par polymérisation d'un monomère A contenant deux doubles liaisons polymérisables par voie radicalaire ou plus par molécule et d'un monomère B contenant un groupe fluoroalkyle et au moins une double liaison polymérisable par voie radicalaire par molécule en présence de 5 à 200 % en moles d'un initiateur de polymérisation C par rapport au nombre total de moles du monomère A et du monomère B.
